# EUROPÄISCHE PATENTSCHRIFT

(11) **EP 3 756 984 B1**
(45) Veröffentlichungstag und Bekanntmachung des Hinweises auf die Patenterteilung: **15.12.2021**
(21) Anmeldenummer: 20177759.6
(22) Anmeldetag: 02.06.2020
(51) Int. Cl.: B62J 1/00

(54) **SATTEL MIT BELÜFTUNGSÖFFNUNG**
SADDLE WITH VENTILATION OPENING
SELLE POURVUE D'OUVERTURE D'AÉRATION

(30) Priorität: 27.06.2019 DE 202019002697 U
(43) Veröffentlichungstag der Anmeldung: 30.12.2020
(73) Patentinhaber: Büchel GmbH & Co. Fahrzeugteilefabrik KG, 98544 Zella-Mehlis (DE)
(72) Erfinder: Büchel, Erhard, 36043 Fulda (DE); Greifenegg, Hans M., 39052 Kaltern (IT)
(74) Vertreter: Sawodny, Michael-Wolfgang

(56) Entgegenhaltungen:
- CN-Y- 2 494 785
- IT-A1- PD20 120 205

## Beschreibung

Die Erfindung betrifft einen Fahrradsattel mit einer Trägerplatte oder Sattelschale, einer auf einer Oberseite der Trägerplatte oder Sattelschale angeordneten Sattelfläche, umfassend ein Polsterteil, sowie einen bevorzugt im Zentralbereich des Fahrradsattels vorgesehenen, sich durch die Trägerplatte oder Sattelschale erstreckende Öffnung.

Des Weiteren betrifft die Erfindung auch ein Fahrrad mit einem derartigen Fahrradsattel.

Einen Fahrradsattel mit einer Vielzahl von Öffnungen zeigt beispielsweise die EP 1849690B1. Der Fahrradsattel gemäß der EP 1849690B1 weist keine zentrale Öffnung auf, sondern vielmehr eine Vielzahl von Belüftungsöffnungen, die einen Luftkanal durch die Sattelfläche hindurch ausbilden, so dass Umgebungsluft durch alle Bereiche des Sattels strömen kann und eine verbesserte Ventilationswirkung am Sattel zur Verfügung gestellt wird.

Des Weiteren weisen gemäß der EP 18496901 B1 die Belüftungsöffnungen eine ovale Form auf und einen Anschlusswinkel von 30°. Nachteilig an einer derartigen Ausgestaltung war, dass die Luftführung durch den Fahrradsattel nur ungenügend war. Insbesondere nachteilig am Sattel gemäß der EP 1849690B1 war, dass Luft, die den Sattel durchströmt, auf den Radfahrer trifft, der auf dem Sattel sitzt und den oberen Rand der Löcher abdeckt. Dadurch wird in der Folge keine Zirkulation mit dem Austausch von kalter und warmer Luft erzeugt. Des Weiteren wird durch den auf dem Sattel sitzenden Fahrer ein Durchströmen der Luft im realen Fahrbetrieb verhindert.

Im Gegensatz zur EP 1849690B1, die eine Vielzahl von Löchern in einem Fahrradsattel zur besseren Durchlüftung zeigt, weist ein Fahrradsattel wie in der DE 202 13 536 U1 gezeigt eine zentrale Öffnung auf. Um die Nachteile eines Sattels mit einer durchgehenden Öffnung, wie in der DE 202 13 536 U1 gezeigt, zu lösen, der den Durchtritt von Spritzwasser ermöglicht, was zu Blasenentzündungen und weiteren Nachteilen für den Fahrradfahrer führen kann schlägt die DE 202 13 536 U1 vor, einen Spritzschutz vorzusehen. Eine vorteilhafte Luftführung ist aus der DE 202 13 536 U1 nicht bekannt.

Dokument ITPD20120205A1 zeigt alle Merkmale der Präambel des Anspruchs 1.

Aufgabe der Erfindung ist es, einen Fahrradsattel anzugeben, der die Nachteile des Standes der Technik vermeidet.

Diese Aufgabe wird durch einen Fahrradsattel gemäß Anspruch 1 gelöst.

Der erfindungsgemäße Fahrradsattel umfasst eine Öffnung, die sich durch die Trägerplatte und die Sattelschale bis zur Sattelfläche erstreckt. Erfindungsgemäß ist vorgesehen, dass in der Öffnung wenigstens ein, bevorzugt mehrere hintereinander angeordnete Stegelemente angeordnet sind. Durch die Stegelemente ist es möglich, dass einströmende Luft direkt bis zum Fahrradfahrer geführt wird und zu einem Kühleffekt führt. Besonders bevorzugt ist es, wenn die Stegelemente derart schräg gestellt sind, dass durch die Anwinkelung der Stegelemente, die auch als Querstreben bezeichnet werden, die Luftführung direkt zum Fahrradfahrer geleitet wird.

Die mehrere, hintereinander angeordneten Stegelemente bzw. Querstreben können bevorzugt unterschiedliche Anwinkelungen, d.h. Anstellwinkel aufweisen, um so einen optimalen Luftstrom zur Verfügung zu stellen. Bevorzugt beträgt der Winkel a, unter dem die Stegelemente gegenüber der Bezuglinie des Körpers schräg gestellt werden, d.h. angewinkelt sind zwischen 20° und 80°. Besonders bevorzugt beträgt der Winkel α der Anwinkelung zwischen 30° und 60°. Besonders bevorzugt ist es, wenn mehrere hintereinander angeordnete Stegelemente unterschiedlicher Anwinkelungen und damit Anstellwinkel aufweisen. Durch die unterschiedliche Anwinkelung der jeweiligen Stegelemente verändert sich der Anstellwinkel gegenüber der Anströmung der Luft. Dies ist erforderlich da man es nicht mit einer konstanten horizontalen Bezugslinie des Sattels und damit einer ungleichmäßigen Luftanströmung zu tun hat.

Des Weiteren weist die Sattelöffnung nicht einen konstanten Querschnitt auf, sondern die Öffnung vergrößert und verkleinert sich in der Längsausrichtung der Öffnung und ist nicht symmetrisch. Der Anstellwinkel bezeichnet den Winkel zwischen der Bezugslinie des Körpers und der Anströmung.

Zusätzlich zur Anwinkelung umfassen die Stegelemente bzw. Querstreben wenigstens eine Vertiefung. Die Vertiefung dient dazu, einen Luftwirbel zu generieren, um so die Luftführung zusätzlich zu den Querstreben zu verbessern. Die Vertiefungen sind besonders bevorzugt halbrunde Vertiefungen mit einem Durchmesser, die auch auf dem gleichen Stegelement, unterschiedlicher Durchmesser aufweisen können. Durch die halbrunden Vertiefungen an den Stegelementen bzw. Querstreben wird ein Luftwirbel gemäß dem Golfballprinzip zur Verfügung gestellt. Das zur Verfügung stellen von Luftwirbeln nach dem Golfballprinzip bedeutet dass eine laminare Grenzschicht in eine turbulente Grenzschicht verändert wird. Durch die Verwirbelung mit Hilfe der halbrunden Vertiefungen in den angewinkelten Stegelementen wird somit die laminare Grenzschicht der Luft in eine turbulente Grenzschicht gewandelt, die eine verstärkte Durchmischung der Luft ermöglicht. Die erhöhte Vermischung der Luft stellt dann einen höheren Wärmetransport gegenüber laminaren Luftströmen zur Verfügung und trägt damit zur Kühlung bei.

Um zu vermeiden, dass bei der erfindungsgemäßen Öffnung, Spritzwasser bis zum Fahrradfahrer vordringt, ist mit Vorteil vorgesehen, dass der erfindungsgemäße Fahrradsattel einen Spritzschutz aufweist, der die Öffnung verschließt. Besonders bevorzugt ist es, wenn der Spritzschutz an der Unterseite der Trägerplatte oder der Sattelschale angeordnet ist. Die Wirkung des Spritzschutzes ist aufgrund der angewinkelten Stegelemente besonders effektiv.

In einer weitergebildeten Ausführungsform kann vorgesehen sein, dass der Fahrradsattel sich nicht nur durch eine verbesserte Luftführung auszeichnet, sondern zusätzlich eine Heizeinrichtung umfasst. Besonders bevorzugt ist es, wenn eine derartige Heizvorrichtung mit einer internen Stromversorgung gespeist wird, die bevorzugt in den Sattel selbst integriert ist.

Neben den unterschiedlichen Ausgestaltungen des belüftbaren Fahrradsattels stellt die Erfindung auch neben einem derartigen Fahrradsattels ein Fahrrad mit einem solchen Fahrradsattel zur Verfügung.

Die Erfindung soll nachfolgend anhand der Figuren beispielhaft ohne Beschränkung hierauf, beschrieben werden.

Es zeigen:
- Figur 1:: Schnitt durch einen Fahrradsattel gemäß der Erfindung im seitlichen Schnitt.
- Figur 2:: Schnitt durch einen Fahrradsattel gemäß der Erfindung mit Luftzuführung.
- Figur 3:: Schnitt durch einen Fahrradsattel mit Luftzuführung und Verwirbelung wie in Figur 1 im Schnitt gezeigt.
- Figur 4:: Draufsicht auf die Oberseite eines Fahrradsattels
- Figur 5:: Ansicht eines Fahrradsattels von unten

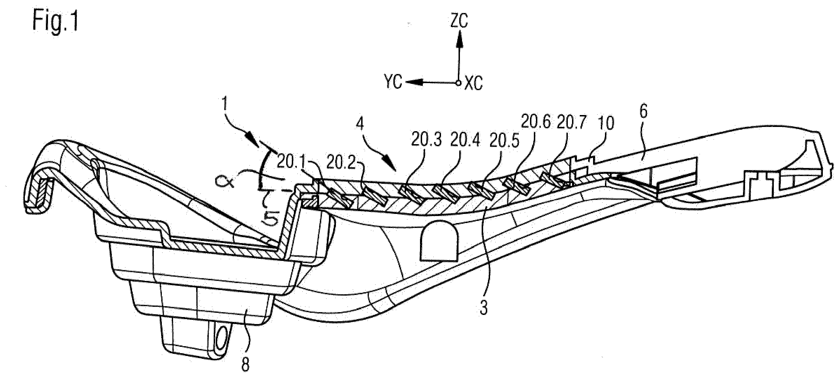

In den Figuren 1 bis 3 ist ein erfindungsgemäßer Fahrradsattel 1 im Schnitt gezeigt.

Der Fahrradsattel 1 umfasst eine Trägerplatte bzw. eine Sattelschale 3, in die eine Öffnung 4 eingelassen ist. Oberhalb der Trägerplatte bzw. der Sattelschale ist eine Polsterung 6 angeordnet, die einen Schaum umfasst, der die Sitzfläche des Fahrradsattels (nicht gezeigt) ergibt. Bevorzugt handelt es sich bei dem Schaum, der ein Polster ausbildet, um ein Polyurethan (PU) Schaumstoff.

Des Weiteren umfasst der Fahrradsattel 1 Dämpfungselemente 8, die beispielsweise als Spiralfedern ausgebildet sein können. Der Schaumstoff des Fahrradsattels, der die Sitzfläche 10 zur Verfügung stellt, ist bevorzugt ein Kunststoffmaterial beispielsweise Polyurethan. Sowohl in die Trägerplatte 3, wie auch in das Polsterteil 6 ist eine zentrale Öffnung 4 eingebracht. Eine zentrale Öffnung ist vorteilhaft, aber für die Erfindung nicht zwingend. Erfindungsgemäß ist vorgesehen, dass in die zentrale Öffnung 4, mehrere hintereinander angeordnete Stegelemente 20.1, 20.2, 20.3, 20.4, 20.5, 20.6, 20.7, eingesetzt werden. Die Stegelemente sind bevorzugt unter einem Winkel α von mehr als 20° und weniger als 80° gegenüber der Bezugslinie des Körpers angeordnet. Ganz besonders bevorzugt ist ein Bereich von 30° bis 60°für die Anwinkelung bzw.den Anstellwinkel wodurch eine besonders gute Durchlüftung aufgrund guter Luftumleitung erreicht wird. Im Anfangsbereich des Sattels fällt die Bezugslinie 5 des Sattels wie dargestellt mit der Horizontalen zusammen. Dies gilt aber nicht für alle Bereiche des Sattels. In anderen Bereichen kann die Bezugslinie auch von der Horizontalen abweichen. In der dargestellten Ausführungsform variiert der Anstellwinkel a, bevorzugt im Bereich 20° bis 80° für jedes einzelne Stegelement 20.1, 20.2, 20.3, 20.4, 20.5, 20.6,20.7. Luft wird dann von der Unterseite des Sattels durch die Öffnungen an den Stegelementen vorbei nach oben zum Fahrradfahrer geführt und durch die angewinkelten Stegelemente geleitet.

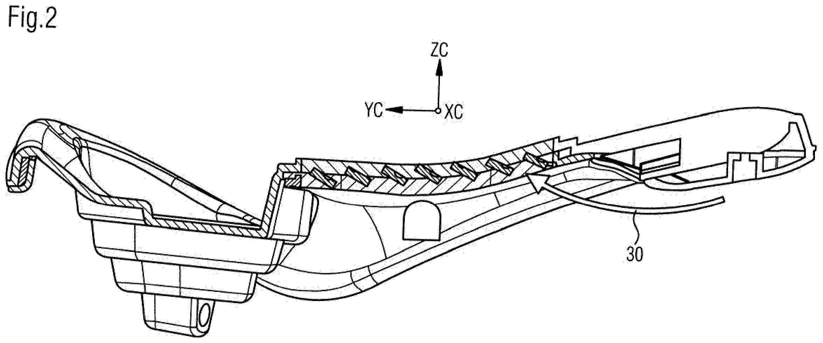

In Figur 2 tragen gleiche Bauteile, wie in Figur 1 dieselben Bezugsziffern. Deutlich zu erkennen sind die unterschiedlichen Winkel α gegenüber der Bezugslinie des Sattels der einzelnen Stegelemente, die für jedes einzelne Stegelement variieren. Durch die unterschiedliche Anwinkelung der jeweiligen Stegelemente verändert sich der Anstellwinkel gegenüber der Anströmung der Luft. Dies ist erforderlich da man es nicht mit einer konstanten horizontalen Bezugslinie des Sattels und einer ungleichmäßigen Luftanströmung zu tun hat. Darüber hinaus weist die Sattelöffnung keinen konstanten Querschnitt auf, sondern die Öffnung vergrößert und verkleinert sich in der Längsausrichtung und ist auch nicht symmetrisch ausgebildet.

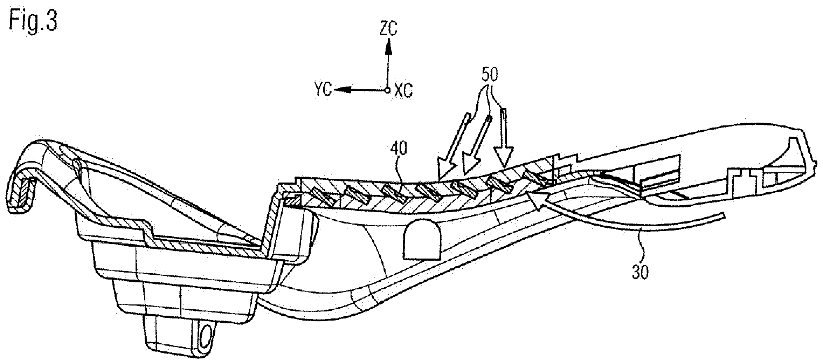

Wie in Figur 2 des Weiteren zu entnehmen, weisen die einzelnen Stegelemente bzw. Verstrebungen zusätzlich zur Anwinkelung um einen Winkel a, der für eine zuverlässige Luftführung des Luftstromes 30 zum Fahrradfahrer hin sorgt, Vertiefungen auf, die gemäß Figur 3 dazu dienen, Luft, die auf die Vertiefungen trifft, in der Vertiefung zu verwirbeln.

Die Anwinkelung der Elemente dient im Wesentlichen dazu, Luft zum Kühlen des Radfahrers durch eine verbesserte Luftführung zur Verfügung zu stellen. Zusätzlich zur Luftleitung zum Kühlen des Radfahrers generieren die Vertiefungen Luftwirbel. Aufgrund der Luftwirbel wird eine verstärkte Durchmischung der Luft erreicht, was einen höheren Wärmetransport bzw. effektiveren Wärmeaustausch und damit bessere Kühlung zur Folge hat.

Die Luftwirbel werden insbesondere dann ausgebildet, wenn es sich bei den Vertiefungen um halbrunde Vertiefungen handelt. Erfindungsgemäß ist vorgesehen, dass die halbrunden Vertiefungen unterschiedliche Durchmesser aufweisen. Dies führt dazu, dass aufgrund der unterschiedlichen Durchmesser bei den halbrunden Vertiefungen unterschiedliche Vortexgeneratoren ausgebildet werden. Die unterschiedlichen Vortexgeneratoren widerrum erhöhen den Tubulatoreffekt und unterstützen die Verwirbelung, was die Kühlung noch weiter verbessert.

Ein Turbulator oder Turbulenz- oder Vortexgenerator bezeichnet in der Aerodynamik eine kleine künstlich aufgebrachte Oberflächenstörung, die eine laminare Grenzschicht in eine turbulente überführt.

Figur 3 zeigt die Verwirbelung 50 in den Vertiefungen und die Luftführung des erfindungsgemäßen Fahrradsattels. Gleiche Bezugsziffern, wie in Figur 1 und 2 werden für dieselben Elemente verwandt. Die Vertiefungen 40, die in die einzelnen Stegelemente 20.1, 20.2, 20.3, 20.4, 20.5, 20.6, 20.7 eingelassen sind, dienen dazu, die zugeführte Luft im Bereich der Öffnung unterhalb der Sitzfläche des Fahrradfahrers zu verwirbeln.

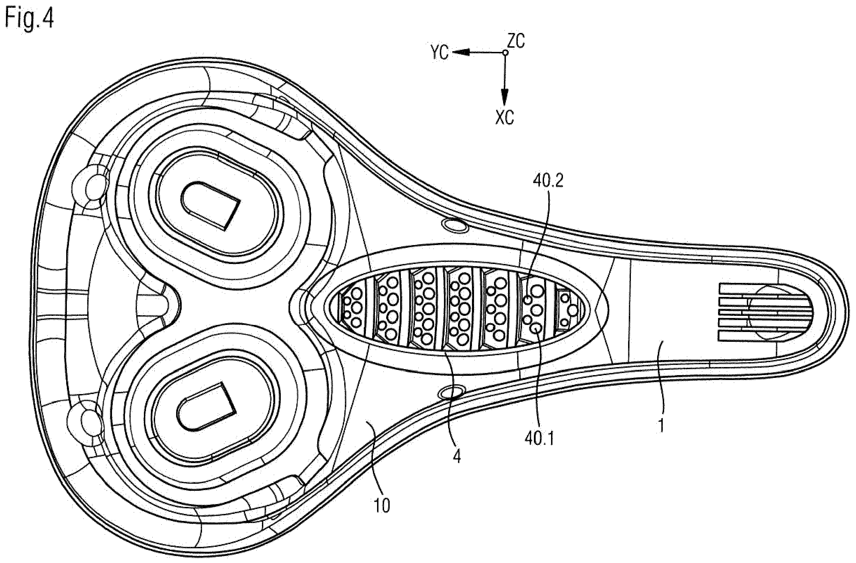

Die unterschiedlichen Ausgestaltungen der Vertiefungen mit verschiedenen Durchmessern ist besonders gut in der Draufsicht auf einen Fahrradsattel 1 in Figur 4 zu erkennen. Die Draufsicht in Figur 4 zeigt im Wesentlichen die Sattelfläche 10. Gut zu erkennen ist auch die zentral in der Mitte der Sattelfläche des Fahrradsattels 1 eingelassene Öffnung 4, die durch die Sattelschale und durch das Sitzpolster reicht und die Luft von unterhalb des Fahrradsattels, bzw. der Sattelschale zum Radfahrer leitet. Die unterschiedlich großen Vertiefungen sind mit 40.1, 40.2 bezeichnet. In der dargestellten Ausführungsform sind die Vertiefungen zur Verwirbelung nebeneinanderliegend entlang des Stegelementes angeordnet. In der Draufsicht ist die Anwinkelung der Stegelemente nicht zu erkennen.

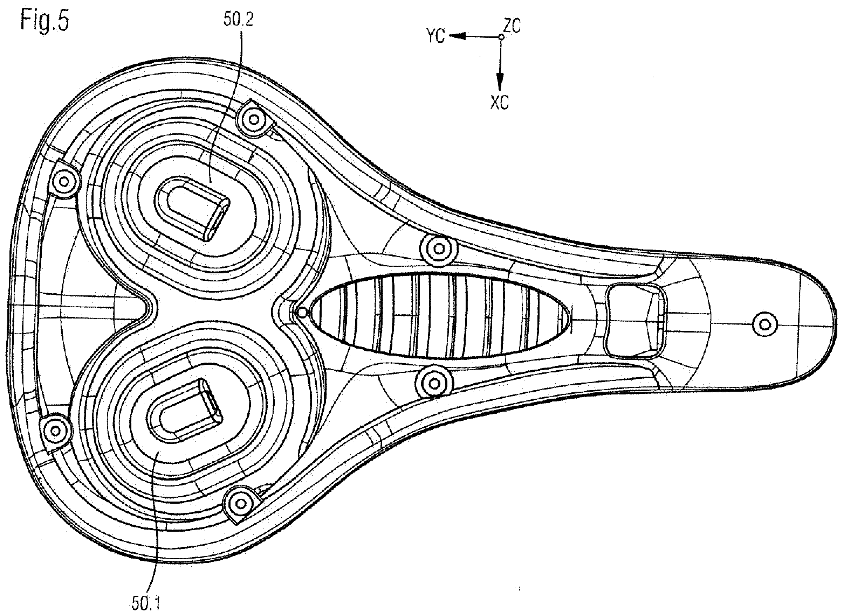

Figur 5 zeigt eine Ansicht des erfindungsgemäßen Fahrradsattels von unten. Deutlich zu erkennen ist die Sattelschale, auf die das Polster aufgesetzt wird, sowie die beiden Auflageelemente 50.1, 50.2 mit denen der Sattel z.B. an einer Sattelhalterung befestigt werden kann. Die Auflageelemente können als Dämpfungselemente ausgelegt sein, müssen es aber nicht.

An der Unterseite der Sattelschale, wie in Figur 5 dargestellt kann ein Spritzschutz vorgesehen sein, der im vorliegenden Fall nicht dargestellt ist. Der Spritzschutz ist so ausgelegt, dass kein Spritzwasser durch die Öffnung zum Fahrradfahrer geleitet wird. Nicht dargestellt ist eine Heizeinrichtung mit der der erfindungsgemäße Fahrradsattel beheizt werden kann. Dieses Merkmal ist nicht zwingend, sondern optional. Ist eine derartige Heizeinrichtung vorgesehen, so kann am Fahrradsattel eine Stromversorgungseinrichtung (nicht dargestellt) vorgesehen sein. Die Stromversorgungsvorrichtung, die besonders bevorzugt in Form einer Hochleistungsbatterie ausgelegt ist, kann dann Heizdrähte, die in das Sitzpolster, beispielsweise in Form von Polyurethan (PU) -Schaumstoff eingelassen sind, umfassen. Auf diese Art und Weise heizt sich der Polyurethan (PU)- Schaumstoff auf und sorgt für eine angenehme Temperatur. Zusätzlich zur Hochleistungsbatterie kann eine Temperaturregeleinrichtung vorgesehen sein, so dass bei Überschreiten einer Temperatur von 40° bis 50° C mit Hilfe der Steuerelektronik die Heizeinrichtung abgeschaltet wird.

Mit der Erfindung wird erstmals ein Fahrradsattel angegeben, der gegenüber dem Stand der Technik eine verbesserte Luftführung aufweist. Insbesondere wird Luft nicht nur zum Fahrradfahrer geführt, sondern auch verwirbelt. Die Verwirbelung der Luft im Bereich der Öffnung hat den Vorteil, dass eine verbesserte Vermischung von Luft stattfindet und damit ein verbesserter Wärmetransport.

## Patentansprüche

1. Fahrradsattel (1) mit
- einer Trägerplatte bzw. Sattelschale (3),
- einer auf einer Oberseite der Trägerplatte bzw. Sattelschale (3) angeordneten Sattelfläche umfassend ein Polsterteil (6),
- einem bevorzugt im Zentralbereich des Fahrradsattels (1) vorgesehene sich durch die Trägerplatte bzw. Sattelschale und die Sattelfläche erstreckende Öffnung (4),
- wobei
die Öffnung (4) mehrere hintereinander angeordnete Stegelemente (20.1, 20.2, 20.3, 20.4, 20.5, 20.6, 20.7) umfasst,
**dadurch gekennzeichnet, dass**
die Stegelemente wenigstens eine Vertiefung (40, 40.1, 40.2) umfassen, wobei
die Vertiefung (40, 40.1, 40.2) eine halbrunde Vertiefung mit einem Durchmesser ist
und
das Stegelement mehrere Vertiefungen (40, 40.1, 40.2) mit unterschiedlichen Durchmessern umfasst.

2. Fahrradsattel nach Anspruch 1,
**dadurch gekennzeichnet, dass**
die Stegelemente in der Öffnung (4) um einen Winkel α schräg gestellt angeordnet sind.

3. Fahrradsattel nach einer der Ansprüche 1 bis 2,
**dadurch gekennzeichnet, dass**
der Winkel α unter dem die Stegelemente schräg gestellt sind im Bereich 20 < α < 80° liegt.

4. Fahrradsattel nach einem der Ansprüche 1 bis 3,
**dadurch gekennzeichnet, dass**
der Winkel α unter dem die Stegelemente schräg gestellt sind im Bereich 30° < α < 60° liegt.

5. Fahrradsattel nach einem der Ansprüche 1 bis 4,
**dadurch gekennzeichnet, dass**
die mehreren, hintereinander angeordneten Stegelemente um unterschiedliche Winkel α schräg gestellt sind.

6. Fahrradsattel nach einem der Ansprüche 1 bis 5,
**dadurch gekennzeichnet, dass**
die Vertiefungen derart ausgebildet sind, dass Vortexgeneratoren zur Verwirbelung der Luft zur Verfügung gestellt werden.

7. Fahrradsattel nach einem der Ansprüche 1 bis 6,
**dadurch gekennzeichnet, dass**
die Öffnung (4) mit einem Spritzschutz verschlossen ist.

8. Fahrradsattel nach Anspruch 7,
**dadurch gekennzeichnet, dass**
der Spritzschutz an einer Unterseite der Trägerplatte bzw. Sattelschale (3) angeordnet ist.

9. Fahrradsattel nach einem der Ansprüche 1 bis 8,
**dadurch gekennzeichnet, dass**
der Fahrradsattel (1) eine Heizeinrichtung umfasst.

10. Fahrrad mit einem Fahrradsattel nach einem der Ansprüche 1 bis 9.

## Claims

1. Bicycle saddle (1), comprising
- a carrier plate or saddle shell (3),
- a saddle surface arranged on an upper side of the carrier plate or saddle shell (3) and comprising a cushion part (6),
- an opening (4) preferably provided in the central region of the bicycle saddle (1) and extending through the carrier plate or saddle shell and the saddle surface,
- wherein the opening (4) comprises a plurality of web elements (20.1,
20.2, 20.3, 20.4, 20.5, 20.6, 20.7) arranged one behind the other, **characterized in that** the web elements comprise at least one depression (40, 40.1, 40.2), wherein the depression (40, 40.1, 40.2) is a semicircular depression having a diameter, and the web element comprises a plurality of depressions (40, 40.1, 40.2) having different diameters.

2. Bicycle saddle according to claim 1, **characterized in that** the web elements in the opening (4) are arranged obliquely by an angle α.

3. Bicycle saddle according to one of claims 1 to 2, **characterized in that** the angle α at which the web elements are inclined lies in the range 20°<α<80°.

4. Bicycle saddle according to one of claims 1 to 3, **characterized in that** the angle α at which the web elements are inclined lies in the range 30°<a< 60°.

5. Bicycle saddle according to one of claims 1 to 4, **characterized in that** the plurality of web elements arranged one behind the other are inclined by different angles α.

6. Bicycle saddle according to one of claims 1 to 5, **characterized in that** the depressions are designed in such a way that vortex generators are provided for swirling the air.

7. Bicycle saddle according to one of claims 1 to 6, **characterized in that** the opening (4) is closed with a splash guard.

8. Bicycle saddle according to claim 7, **characterized in that** the splash guard is arranged on an underside of the carrier plate or saddle shell (3).

9. Bicycle saddle according to one of claims 1 to 8, **characterized in that** the bicycle saddle (1) comprises a heating device.

10. Bicycle having a bicycle saddle according to one of claims 1 to 9.

## Revendications

1. Selle de vélo (1) avec
- une plaque de support ou une coque de selle (3),
- une surface de selle disposée sur une face supérieure de la plaque de support ou de la coque de selle (3) et comprenant une partie rembourrée (6),
- une ouverture (4) prévue de préférence dans la partie centrale de la selle de vélo (1) et s'étendant à travers la plaque de support ou la coque de selle et la surface de selle,
- dans laquelle l'ouverture (4) comprend plusieurs barrettes (20.1, 20.2, 20.3, 20.4, 20.5, 20.6, 20.7) disposées les unes à la suite des autres, **caractérisée en ce que** les barrettes comprennent au moins un creux (40, 40.1, 40.2), lequel creux (40, 40.1, 40.2) est un creux en demi-cercle d'un certain diameter et la barrette présente plusieurs creux (40, 40.1, 40.2) de diamètres différents.

2. Selle de vélo selon la revendication 1, **caractérisée en ce que** les barrettes sont disposées dans l'ouverture (4) à l'oblique selon un angle a.

3. Selle de vélo selon l'une des revendications 1 à 2, **caractérisée en ce que** l'angle α sous lequel les barrettes sont placées à l'oblique est compris dans la plage 20 < α < 80°.

4. Selle de vélo selon l'une des revendications 1 à 3, **caractérisée en ce que** l'angle α sous lequel les barrettes sont placées à l'oblique est compris dans la plage 30 < α < 60°.

5. Selle de vélo selon l'une des revendications 1 à 4, **caractérisée en ce que** les plusieurs barrettes disposées à la suite des autres sont placées à l'oblique sous différents angles a.

6. Selle de vélo selon l'une des revendications 1 à 5, **caractérisée en ce que** les creux sont conformés de telle façon que des générateurs de tourbillons sont créés pour produire des turbulences de l'air.

7. Selle de vélo selon l'une des revendications 1 à 6, **caractérisée en ce que** l'ouverture (4) est fermée par une protection pare-éclaboussures.

8. Selle de vélo selon la revendication 7, **caractérisée en ce que** la protection pare-éclaboussures est disposée sur une face inférieure de la plaque de support ou de la coque de selle (3).

9. Selle de vélo selon l'une des revendications 1 à 8, **caractérisée en ce que** la selle de vélo (1) comprend une installation de chauffage.

10. Vélo muni d'une selle de vélo selon l'une des revendications 1 à 9.
